(19) Europäisches Patentamt
European Patent Office
Office européen des brevets

(11) **EP 2 766 980 B1**

(12) **EUROPÄISCHE PATENTSCHRIFT**

(45) Veröffentlichungstag und Bekanntmachung des Hinweises auf die Patenterteilung:
**22.09.2021  Patentblatt 2021/38**

(51) Int Cl.:
***H02M 1/12*** *(2006.01)*     ***H02M 1/42*** *(2007.01)*
***H02J 3/18*** *(2006.01)*

(21) Anmeldenummer: **11805466.7**

(22) Anmeldetag: **15.12.2011**

(86) Internationale Anmeldenummer:
**PCT/EP2011/072903**

(87) Internationale Veröffentlichungsnummer:
**WO 2013/087110 (20.06.2013 Gazette 2013/25)**

(54) **KONVERTER IN DREIECKSKONFIGURATION**

CONVERTER IN DELTA CONFIGURATION

CONVERTISSEUR EN CONFIGURATION TRIANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.08.2014  Patentblatt 2014/34**

(73) Patentinhaber: **Siemens Energy Global GmbH & Co. KG**
**81739 München (DE)**

(72) Erfinder:
• **SCHUSTER, Dominik**
**91456 Diespeck (DE)**
• **GAMBACH, Herbert**
**91080 Uttenreuth (DE)**

(56) Entgegenhaltungen:
**WO-A1-2010/145706     WO-A1-2011/105177**

• **PENG F Z ET AL: "A universal STATCOM with delta-connected cascade multilevel inverter", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 3529-3533Vol.5, XP010738277, DOI: 10.1109/PESC.2004.1355099 ISBN: 978-0-7803-8399-9**
• **PEREIRA M ET AL: "SVC PLUS: An MMC STATCOM for network and grid access applications", 2011 IEEE TRONDHEIM POWERTECH : TRONDHEIM, NORWAY, 19 - 23 JUNE 2011, IEEE, PISCATAWAY, NJ , 1. Januar 2011 (2011-01-01), Seiten 1-5, XP007921185, ISBN: 978-1-4244-8419-5 Gefunden im Internet: URL:http://ieeexplore.ieee.org/xpl/article Details.jsp?arnumber=6019245 [gefunden am 2012-10-22] in der Anmeldung erwähnt**

EP 2 766 980 B1

**Beschreibung**

Die Erfindung bezieht sich auf einen Konverter in Dreieckskonfiguration für eine dreiphasige Spannung. Konverter mit Dreieckskonfiguration können beispielsweise zur Blindleistungs-, Oberschwingungs- und Flickerkompensation eingesetzt werden.

Ein Konverter für eine dreiphasige Spannung ist beispielsweise in der Druckschrift "SVC PLUS: An MMC STATCOM for Network and Grid Access Applications" (M. Pereira et al., 2011 IEEE Trondheim Power Tech) beschrieben. Dieser vorbekannte Konverter wird als Kompensator eingesetzt.

Die Patentanmeldung WO 2011/105177 A1 offenbart einen Stromrichter mit Blindleistungskompensation für den Antrieb eines elektrischen Motors. Der Stromrichter weist drei Zweige in Dreieckschaltung auf, in jedem Zweig sind eine Mehrzahl von Zellen in Reihenschaltung angeordnet.

Aus der internationalen Patentanmeldung WO 2010/145706 A1 ist ein Konverter in Dreieckskonfiguration bekannt, bei dem eine dritte Oberschwingung des Stroms in die Dreiecksschaltung eingespeist wird, um den Spitzenwert des Stroms zu verringern.

Während des Betriebs eines Konverters mit Dreieckskonfiguration entsteht bei heutzutage bekannten Regel- und Steuerverfahren eine Energiepulsation in den Konverterzweigen des Konverters.

Der Erfindung liegt die Aufgabe zugrunde, einen Konverter mit Dreieckskonfiguration anzugeben, bei der der Energiehub dieser Energiepulsation gegenüber herkömmlichen Konvertern reduziert werden kann.

Diese Aufgabe wird erfindungsgemäß durch einen Konverter mit den Merkmalen gemäß Patentanspruch 1 gelöst. Vorteilhafte Ausgestaltungen des erfindungsgemäßen Konverters sind in Unteransprüchen angegeben.

Danach ist erfindungsgemäß ein Konverter vorgesehen mit drei elektrisch im Dreieck geschalteten Reihenschaltungen, von denen jede jeweils mindestens zwei in Reihe geschaltete Schaltmodule umfasst, und einer mit den Schaltmodulen in Verbindung stehenden Steuereinrichtung, die die Schaltmodule derart ansteuern kann, dass in den Reihenschaltungen Zweigströme mit der Grundfrequenz der dreiphasigen Spannung und mit mindestens einer zusätzlichen Stromoberschwingung fließen, wobei die zusätzliche Stromoberschwingung derart bemessen ist, dass sie in den Reihenschaltungen des Konverters im Kreis fließt und innerhalb des Konverters verbleibt.

Ein wesentlicher Vorteil des erfindungsgemäßen Konverters besteht darin, dass bei diesem - im Unterschied zu vorbekannten Konvertern - der Energiehub durch das Einspeisen zusätzlicher Stromoberschwingungen reduziert werden kann. Dies soll kurz näher erläutert werden: Im quasistationären Zustand pulsiert die Summe der in Kondensatoren jedes Zweiges gespeicherten Energie um eine aus der Auslegung sowie aus der Steuerung/Regelung des Konverters folgende, durchschnittliche Zweigenergie. Innerhalb jeder Periode weist jeder Zweig des Konverters somit einen Zeitpunkt auf, in dem die Summe der im Zweig gespeicherten Energien maximal und größer ist als ihr zeitliches Mittel. Ebenso entsteht innerhalb jeder Periode der Netzspannung ein Zeitpunkt, zu dem die im Zweig gespeicherte Energie minimal und kleiner ist als ihr zeitliches Mittel. Die Differenz zwischen maximaler und minimaler Zweigenergie, also der Energiehub, ist in quasistationärer und symmetrischer Betrachtung vom Betriebspunkt des Konverters vorgegeben. Die erfindungsgemäß vorgesehenen zusätzlichen Stromoberschwingungen können in einfacher und vorteilhafter Weise den Energiehub reduzieren, ohne dabei außen in Erscheinung treten oder stören zu können, denn sie fließen erfindungsgemäß im Kreis, so dass sie den Konverter an dessen Außenanschlüssen nicht verlassen können.

Konverter mit Dreieckskonfiguration sind im Allgemeinen im Gegensatz zu anderen Konvertern in Brückenkonfiguration nicht in der Lage, im stationären Betrieb Wirkleistung zu übertragen oder umzuwandeln (abgesehen von ihrer eigenen Verlustleistung). Daher wird es als vorteilhaft angesehen, wenn der Konverter zur Blindleistungs-, Oberschwingungs- und Flickerkompensation eingesetzt wird. Mit anderen Worten handelt es sich bei dem Konverter vorzugsweise um einen Kompensator, insbesondere einen Blindleistungs-, Oberschwingungs- oder Flickerkompensator, oder um einen Bestandteil eines solchen Kompensators.

Besonders bevorzugt handelt es sich bei dem Konverter um einen kaskadierten Vollbrückenkonverter.

Bezüglich des Aufbaus des Konverters wird es als vorteilhaft angesehen, wenn der Konverter ein Oberschwingungsermittlungsmodul aufweist, das anhand des jeweiligen Konverterbetriebszustands mindestens eine zusätzliche Stromoberschwingung ermittelt, wobei die zusätzliche Stromoberschwingung derart bemessen ist, dass sie in den Reihenschaltungen des Konverters im Kreis fließt und innerhalb des Konverters verbleibt, und wobei die Steuereinrichtung die Schaltmodule derart ansteuert, dass die von dem Oberschwingungsermittlungsmodul ermittelte mindestens eine zusätzliche Stromoberschwingung in den Reihenschaltungen im Kreis fließt.

Die zusätzlichen Stromoberschwingungen sind hinsichtlich ihrer Größe und Phasenlage erfindungsgemäß derart bemessen, dass der Energiehub in jeder der Reihenschaltungen kleiner ist als ohne die zusätzlichen Stromoberschwingungen.

Jedes der Schaltmodule umfasst bevorzugt jeweils mindestens vier Transistoren und einen Kondensator.

Als Erfindung wird außerdem ein Verfahren mit den Merkmalen gemäß Patentanspruch 5 angesehen zum Betreiben eines Konverters für eine dreiphasige Spannung mit drei elektrisch im Dreieck geschalteten Reihenschaltungen, von denen jede jeweils mindestens zwei in Reihe geschaltete Schaltmodule umfasst.

Erfindungsgemäß ist bezüglich eines solchen Verfahrens vorgesehen, dass die Schaltmodule derart angesteuert werden, dass in den Reihenschaltungen Zweigströme mit der Grundfrequenz der dreiphasigen Spannung und einer vorgegebenen Größe und/oder einem vorgegebenen zeitlichen Verlauf fließen, anhand des jeweiligen Konverterbetriebszustands mindestens eine zusätzliche Stromoberschwingung ermittelt wird, wobei die zusätzliche Stromoberschwingung derart bemessen wird, dass sie in den Reihenschaltungen des Konverters im Kreis fließt und innerhalb des Konverters verbleibt, und die Schaltmodule derart angesteuert werden, dass die jeweils ermittelte mindestens eine zusätzliche Stromoberschwingung in den Reihenschaltungen im Kreis fließt.

Bezüglich der Vorteile des erfindungsgemäßen Verfahrens sei auf die oben erläuterten Vorteile des erfindungsgemäßen Konverters verwiesen, da die Vorteile des erfindungsgemäßen Konverters denen des erfindungsgemäßen Verfahrens im Wesentlichen entsprechen.

Erfindungsgemäß werden die zusätzlichen Stromoberschwingungen hinsichtlich ihrer Größe und Phasenlage derart bemessen, dass der Energiehub in jeder der Reihenschaltungen kleiner ist als ohne die zusätzlichen Stromoberschwingungen.

Vorzugsweise werden ein oder mehrere Oberschwingungsströme, deren Frequenz einem durch drei teilbaren Vielfachen der Grund- bzw. Netzfrequenz der dreiphasigen Spannung entspricht, in die Zweigströme der Reihenschaltungen (R1, R2, R3) eingeprägt.

Auch wird es als vorteilhaft angesehen, wenn in den Konverter eine oder mehrere Oberschwingungsspannungen eingeprägt werden, deren Frequenz einer durch drei teilbaren Harmonischen der Grund- bzw. Netzfrequenz der dreiphasigen Spannung entspricht.

Besonders bevorzugt wird mit dem Konverter eine Kompensation durchgeführt, insbesondere eine Blindleistungs-, Oberschwingungs- oder Flickerkompensation.

Die Erfindung wird nachfolgend anhand von Ausführungsbeispielen näher erläutert; dabei zeigen beispielhaft:

Figur 1    ein erstes Ausführungsbeispiel für einen erfindungsgemäßen Konverter mit einer Steuereinrichtung sowie einem mit der Steuereinrichtung verbundenen Oberschwingungsermittlungsmodul,

Figur 2    schematisch beispielhaft die in dem Konverter gemäß Figur 1 im Kreis fließenden Stromoberschwingungen,

Figur 3    die in dem Konverter gemäß Figur 1 fließenden Ströme und anliegenden Spannungen bei einem Betrieb des Konverters ohne das Oberschwingungsermittlungsmodul,

Figur 4    die in dem Konverter gemäß Figur 1 fließenden Ströme und anliegenden Spannungen während eines Betriebs des Oberschwingungsermittlungsmoduls, also bei im Kreis fließenden zusätzlichen Stromoberschwingungen,

Figur 5    ein Ausführungsbeispiel für ein Schaltmodul für den Konverter gemäß Figur 1,

Figur 6    ein zweites Ausführungsbeispiel für einen erfindungsgemäßen Konverter, bei dem das Oberschwingungsermittlungsmodul in der Steuereinrichtung implementiert ist,

Figur 7    ein drittes Ausführungsbeispiel für einen erfindungsgemäßen Konverter, bei dem das Oberschwingungsermittlungsmodul durch ein Softwareprogrammmodul gebildet ist, und

Figur 8    ein viertes Ausführungsbeispiel für einen erfindungsgemäßen Konverter, bei dem das Oberschwingungsermittlungsmodul unmittelbar Messsignale bzw. Messdaten verarbeitet.

In den Figuren werden der Übersicht halber für identische oder vergleichbare Komponenten stets dieselben Bezugszeichen verwendet.

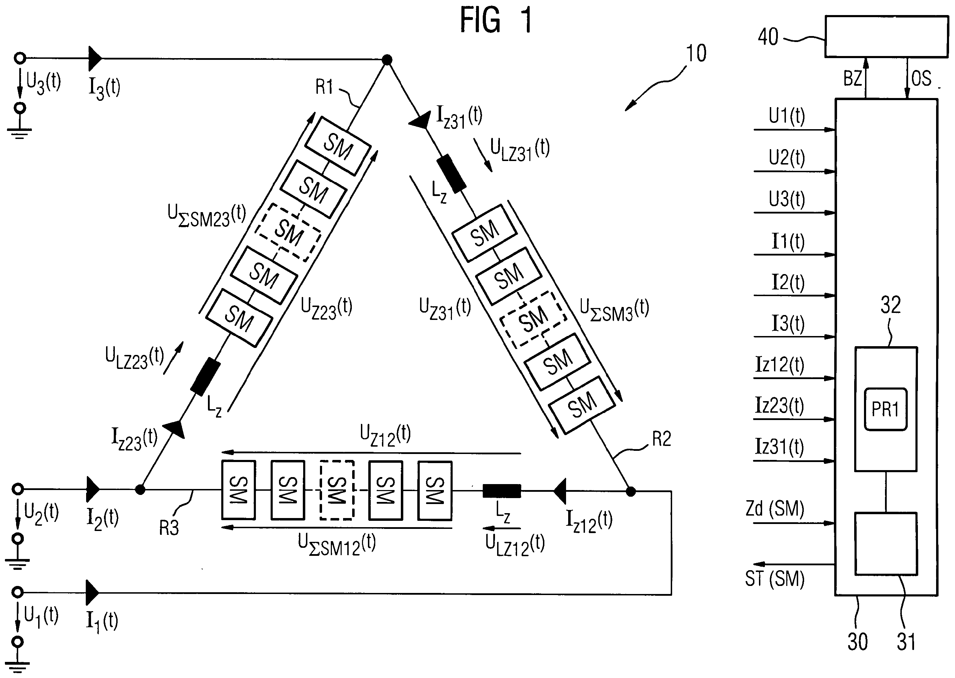

Die Figur 1 zeigt einen dreiphasigen Konverter 10 für eine dreiphasige Spannung. Die Phasenspannungen der dreiphasigen Spannung sind in der Figur 1 mit den Bezugszeichen U1(t), U2(t) und U3(t) bezeichnet. Die aufgrund der Phasenspannungen U1(t), U2(t) und U3(t) fließenden Phasenströme sind mit den Bezugszeichen I1(t), I2(t) und I3(t) gekennzeichnet.

Der Konverter 10 umfasst drei elektrisch im Dreieck geschaltete Reihenschaltungen R1, R2, R3, von denen jede jeweils mindestens zwei in Reihe geschaltete Schaltmodule SM und eine Induktivität L umfassen.

Mit den Schaltmodulen SM steht eine Steuereinrichtung 30 in Verbindung, die die Schaltmodule SM mittels schaltmodulindividueller Steuersignale ST(SM) derart ansteuern kann, dass in den Reihenschaltungen R1, R2, R3 Zweigströme Iz12(t), Iz31(t) und Iz23(t) mit der Grundfrequenz der dreiphasigen Spannung und zusätzlichen Stromoberschwingungen fließen. Wie weiter unten noch im Detail erläutert wird, können die zusätzlichen Stromoberschwingungen derart bemessen sein, dass sie in den Reihenschaltungen R1, R2, R3 des Konverters 10 im Kreis fließen und innerhalb des Konverters 10 verbleiben und nicht in die Phasenströme I1(t), I2(t) und I3(t) einfließen.

Zur Bildung der zusätzlichen Stromoberschwingungen weist der Konverter 10 ein Oberschwingungsermittlungsmodul 40 auf, das anhand des jeweiligen Konverterbetriebszustands für jede der Reihenschaltungen R1, R2, R3 jeweils mindestens eine zusätzliche Stromoberschwingung ermittelt.

Die Steuereinrichtung 30 ist über individuelle Steuerleitungen jeweils mit jedem der Schaltmodule SM der drei Reihenschaltungen R1, R2 und R3 verbunden. Die Verbindungsleitungen sind in der Figur 1 aus Gründen der Übersicht nicht eingezeichnet. Zur Ansteuerung der Schaltmodule SM erzeugt die Steuereinrichtung 30 die Steuersignale ST(SM), die über die nicht gezeigten Steuerleitungen zu den Schaltmodulen übertragen werden.

Zur Ermittlung der optimalen Steuersignale ST(SM) ist die Steuereinrichtung 30 eingangsseitig mit einer Vielzahl an Messsignalen und/oder Messdaten beaufschlagt. Beispielsweise handelt es sich um Messsignale und/oder Messdaten, die die an dem Konverter anliegenden Wechselspannungen U1(t), U2(t) und U3(t), die fließenden Phasenströme I1(t), I2(t) und I3(t) und/oder die Zweigströme Iz12(t), Iz23(t) und Iz31(t) angeben.

Darüber hinaus ist die Steuereinrichtung 30 - beispielsweise über die bereits erwähnten Steuerleitungen oder über weitere Signalleitungen - derart mit den Schaltmodulen SM der drei Reihenschaltungen R1, R2 und R3 verbunden, dass den jeweiligen Zustand der Schaltmodule beschreibende Zustandsdaten Zd(SM) an die Steuereinrichtung 30 übermittelt werden können.

Die Steuereinrichtung 30 weiß also aufgrund der eingangsseitig anliegenden Daten, welche Spannungen und Ströme vorhanden sind, sowie außerdem, in welchem Betriebszustand sich die einzelnen Schaltmodule SM der drei Reihenschaltungen R1, R2 und R3 befinden.

Aufgrund der eingangsseitig anliegenden Messsignale und/oder Messdaten und der eingangsseitig anliegenden Zustandsdaten ist die Steuereinrichtung 30 in der Lage, die Schaltmodule SM derart anzusteuern, dass ein gewünschtes Konverterverhalten, beispielsweise ein gewünschtes Kompensationsverhalten, insbesondere ein gewünschtes Blindleistungs-, Oberschwingungs- oder Flickerkompensationsverhalten, erreicht wird.

Um die beschriebenen Steueraufgaben wahrnehmen zu können, kann die Steuereinrichtung 30 beispielsweise eine Recheneinrichtung (z. B. in Form einer Datenverarbeitungsanlage oder eines Computers) 31 umfassen, die derart programmiert ist, dass sie in Abhängigkeit von den eingangsseitig anliegenden Messsignalen, Messdaten bzw. Zustandsdaten die jeweils optimale Ansteuerung der Schaltmodule SM ermittelt und in dieser Weise die zur Ansteuerung nötigen Steuersignale ST(SM) erzeugt. Ein entsprechendes Steuerprogramm (bzw. Steuerprogrammmodul) PR1 zur Ansteuerung der Recheneinrichtung kann in einem in der Steuereinrichtung 30 befindlichen Speicher 32 abgespeichert sein.

Das bereits erwähnte Oberschwingungsermittlungsmodul 40 erhält von der Steuereinrichtung 30 über eine Steuerleitung Betriebszustandsdaten BZ, die den Betriebszustand des Konverters 10 beschreiben. Das Oberschwingungsermittlungsmodul 40 erzeugt in Abhängigkeit von den Betriebszustandsdaten BZ Oberschwingungsgehaltsdaten OS, die für jede der drei Reihenschaltungen R1, R2 und R3 jeweils mindestens eine zusätzliche Stromoberschwingung definieren, die in der jeweiligen Reihenschaltung R1, R2 und R3 zusätzlich fließen soll.

Die Steuereinrichtung 30 verarbeitet die von dem Oberschwingungsermittlungsmodul 40 erhaltenen Oberschwingungsgehaltsdaten OS und modifiziert die Ansteuerung der Schaltmodule SM der Reihenschaltungen R1, R2 und R3 mittels der Steuersignale ST(SM) derart, dass in den Reihenschaltungen nicht nur diejenigen Zweigströme fließen, die für das gewünschte Konverterverhalten erforderlich wären, sondern darüber hinaus auch die zusätzlichen Stromoberschwingungen fließen, die von dem Oberschwingungsermittlungsmodul 40 ermittelt worden sind.

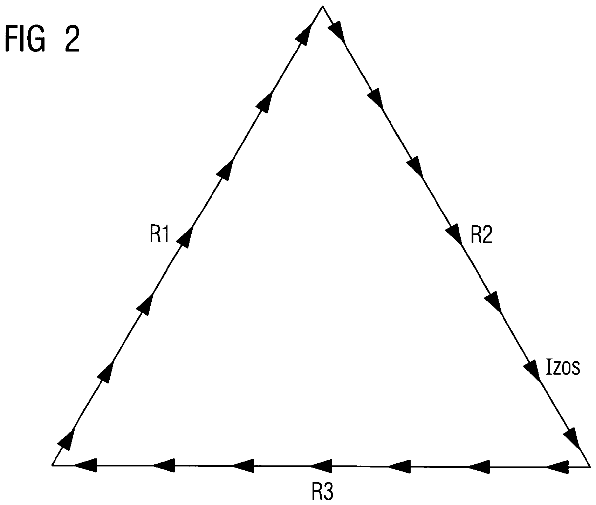

Die zusätzlichen Stromoberschwingungen, die von dem Oberschwingungsermittlungsmodul 40 ermittelt werden, sind hinsichtlich ihres Betrages und ihrer Phasenlage derart bemessen, dass die zusätzlichen Stromoberschwingungen in den drei Reihenschaltungen R1, R2 und R3 im Kreis fließen. Dies ist schematisch in der Figur 2 gezeigt.

Es lässt sich in der Figur 2 erkennen, dass die zusätzlichen Stromoberschwingungen Izos nur innerhalb der drei Reihenschaltungen R1, R2 und R3 fließen und den Konverter nicht verlassen.

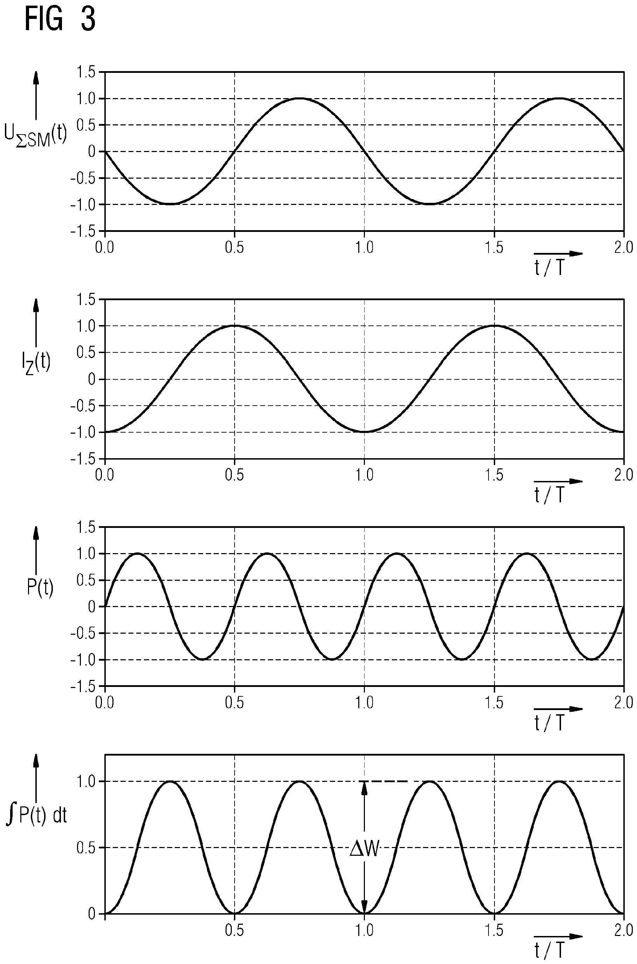

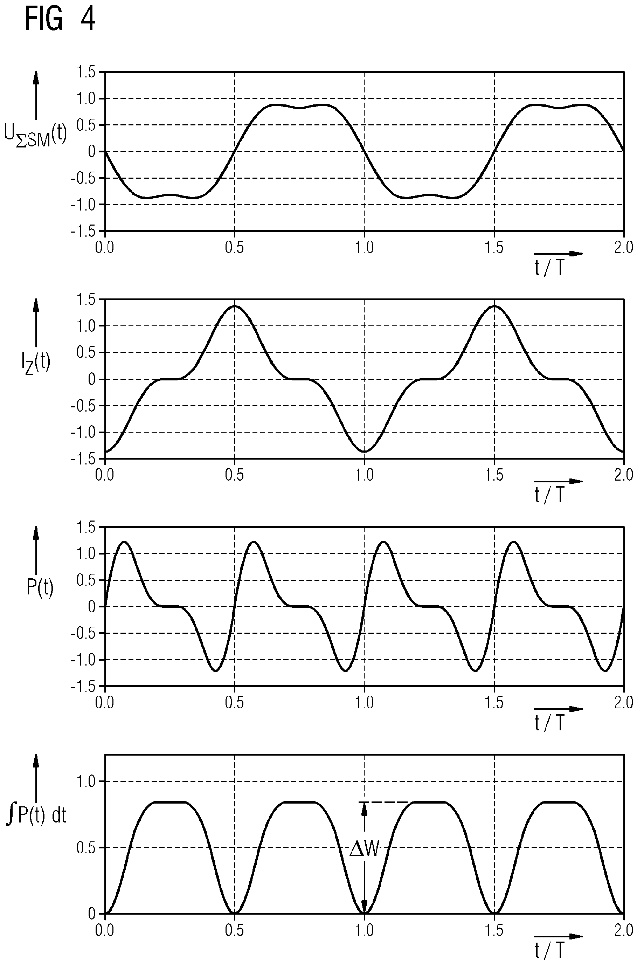

Die zusätzlichen Stromoberschwingungen Izos überlagern sich mit den zum Betrieb des Konverters 10 "nötigen" Zweigströmen in den Reihenschaltungen R1, R2 und R3 dabei derart, dass der Energiehub $\Delta W$ in jeder der drei Reihenschaltungen R1, R2 und R3 kleiner wird als dies ohne die zusätzlichen Stromoberschwingungen Izos der Fall wäre. Dies ist in den Figuren 3 und 4 im Detail gezeigt.

In den Figuren 3 und 4 bezeichnet die Variable $U_{\Sigma}sm(t)$ beispielhaft die Spannung an einer der Schaltmodulgruppen einer der Reihenschaltungen R1, R2 oder R3, Iz(t) den durch die entsprechende Schaltmodulgruppe fließenden Zweigstrom, P(t) die sich ergebende Leistung in der jeweiligen Schaltmodulgruppe und $\int P(t)dt$ das entsprechende Integral über der Leistung, aus der sich der jeweilige Energiehub $\Delta W$ ergibt.

Die Figur 3 zeigt die Kurvenverläufe ohne die zusätzlichen Stromoberschwingungen Izos, also den Fall, dass in den Reihenschaltungen R1, R2 und R3 nur diejenigen Zweigströme fließen, die zum Konvertieren erforderlich sind.

Die Figur 4 zeigt die Kurvenverläufe für den identischen Betriebspunkt mit den zusätzlichen Stromoberschwingungen Izos, also den Fall, dass auf die Zweigströme die Stromoberschwingungen durch eine entsprechende Ansteuerung der Schaltmodule SM aufmoduliert werden. Es ist ersichtlich, dass der Energiehub $\Delta W$ aufgrund der zusätzlichen

Stromoberschwingungen kleiner ist als dies ohne die entsprechenden Stromoberschwingungen der Fall ist (vgl. Figur 3).

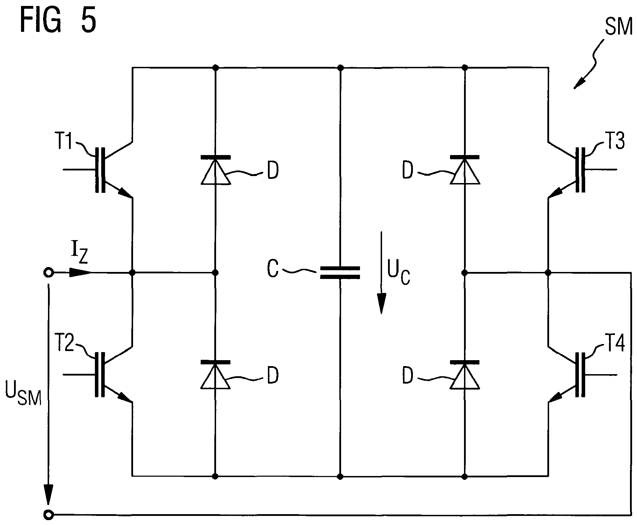

In der Figur 5 ist ein Ausführungsbeispiel für ein Schaltmodul SM gezeigt. Das Schaltmodul SM weist vier Transistoren T1-T4, vier Dioden D und einen Kondensator C auf, an dem eine Kondensatorspannung Uc abfällt. Zur Ansteuerung wird einer der Transistoren (hier Transistor T2) mit einer Steuerspannung $U_{SM}$ von der Steuereinrichtung 30 gemäß Figur 1 beaufschlagt.

Die Arbeitsweise des Oberschwingungsermittlungsmoduls 40 gemäß Figur 1 soll nachfolgend näher erläutert werden:

Der Energiehub $\Delta W$ ist im quasistationären Zustand nur von Frequenz und Amplitude des Wechselspannungssystems sowie von Phasenwinkel, Frequenz und Amplitude der Ströme im Wechselspannungssystem abhängig. Für die Reihenschaltung R1 in Figur 1 gilt beispielsweise für den Fall einer reinen Nutzung als Blindleistungskompensator und unter Vernachlässigung der Konverterverluste:

$$\Delta W = \max\left[\int P(t)\,dt\right] - \min\left[\int P(t)\,dt\right] \qquad (1)$$

mit

$$P(t) = U_{\Sigma SM12}(t) \cdot I_{Z12}(t)\,, \qquad (2)$$

$$I_{Z12}(t) = -\hat{I}_{Z12} \cdot \sin(\omega \cdot t + \varphi)\,, \qquad (3)$$

$$U_{\Sigma SM12}(t) = \hat{U}_{Z12} \cdot \sin(\omega \cdot t) - L_Z \cdot \left(\hat{I}_{Z12} \cdot \cos\left(\omega \cdot t + \frac{\pi}{2}\right) \cdot \omega\right) \qquad (4)$$

Die beschriebene Energiepulsation wird im symmetrischen, quasistationären Zustand von allen Zweigen des Konverters identisch, jedoch phasenverschoben durchlaufen. Daraus folgt eine Pulsation der Differenz der Energien zweier Zweige, die "Zweigenergiedifferenz". Der zeitliche Verlauf der Energiedifferenz zweier Zweige ist dann direkt vom zeitlichen Verlauf der Energie eines Zweiges sowie der Phasenverschiebung der Spannungen und Ströme am Wechselspannungsabgriff der Zweige abhängig.

Die in einem Zweig gespeicherte Energie wird vorzugsweise im zeitlichen Mittel gleichmäßig auf die Kondensatoren der Schaltmodule des jeweiligen Zweiges verteilt. Damit werden die Spannungen der Schaltmodulkondensatoren eines Zweiges annähernd gleich gehalten.

Die einzelnen Kondensatoren sind dabei für eine bestimmte Maximalspannung Umax spezifiziert. Daraus folgt eine maximal im Zweig speicherbare Energie Wmax, die von der Anzahl der Submodule N im Zweig, sowie der Kapazität C der einzelnen Submodule abhängt.

$$W_{\max} = N \cdot \frac{C}{2} \cdot \left(U_{C,\max}\right)^2 \qquad (5)$$

Bei Überschreitung der Maximalenergie Wmax muss der Konverter aufgrund der Gefahr seiner Zerstörung abgeschaltet werden.

Es besteht ebenso eine Untergrenze für die Zweigenergie, sie folgt aus der vom Modulstapel zu stellenden Spannung $U_{\Sigma SM}(t)$.

$$W_{\min}(t) = \frac{\left(U_{\Sigma SM}(t) \cdot \frac{1}{k}\right)^2}{N} \cdot \frac{C}{2} \qquad , \text{ mit } k < 1, \text{ für alle } t \qquad (6)$$

Der Aussteuergrad k ist zwingend kleiner eins, sein konkreter Wert folgt aus der Qualität der Regelung des Konverters und den Anforderungen an sein Regelverhalten. Wird die Minimalenergie unterschritten, so ist der Konverter nicht mehr regelfähig.

Bei Kurzschlüssen und anderen Fehlern an den Klemmen des Konverters muss von einzelnen Zweigen eine hohe Energiemenge aufgenommen oder abgegeben werden. Diese Gegebenheit folgt aus den Anforderungen der angeschlossenen Netze oder Anlagen zum anforderungsgemäßen Beherrschen der entstehenden hohen Ströme.

Die Mindestenergie $W_{min+res}$ eines Zweiges ist damit vorgegeben und entspricht der minimal zur Erhaltung der Regelfähigkeit nötigen Zweigenergie $W_{min}$ zuzüglich der im schlimmsten Falle im Fehlerfall abzugebenden Energie $W_{res,neg}$.

$$W_{\min+res} = W_{\min} + W_{res,neg} \qquad\qquad (7)$$

Die in einem Zweig des Konverters maximal zu speichernde Energie $W_{max}$ ist ebenfalls physikalisch vorgegeben. Sie ist zunächst die Summe aus o. g. Minimalenergie $W_{min+res}$ zuzüglich des maximalen, im Normalbetrieb auftretenden Energiehubs $\Delta W_{max}$. Dem ist die Reserveenergie $W_{res,pos}$ für Fehlerfälle, welche die Zweigenergie erhöhen, hinzuzuaddieren:

$$W_{\max} = \Delta W_{\max} + W_{\min+res} + W_{res,pos} \le N \cdot \frac{C}{2} \cdot \left(U_{C,\max}\right)^2 \qquad\qquad (8)$$

Wie oben bereits erwähnt, sind die einzelnen Kondensatoren in den Schaltmodulen der Konverterzweige für eine bestimmte Maximalspannung $U_{C,max}$ spezifiziert. Daraus folgt eine maximal im Zweig speicherbare Energie, die von der Anzahl der Schaltmodule N im Zweig abhängt. Dabei muss für N und die Kapazität der Schaltmodulkondensatoren C gelten, dass die bei Betrieb oder Fehlerfall des Konverters auftretende Zweigenergie stets kleiner ist als die maximal im Zweig speicherbare Energie:

$$W_{\max} = \Delta W_{\max} + W_{\min+res} + W_{res,pos} \le N \cdot \frac{C}{2} \cdot \left(U_{C,\max}\right)^2 \qquad\qquad (9)$$

Bei Nichteinhaltung dieser Bedingung müsste der Konverter abgeschaltet werden, da er sonst zerstört werden würde.

Es ist zu erkennen, dass damit der spezifizierte Betrieb mit dem höchsten Energiehub die minimale Modulzahl und Modulkapazität des Konverters vorgibt. Durch eine Verringerung des maximalen Energiehubes, wie sie durch das Oberschwingungsermittlungsmodul 40 erreicht wird, kann somit eine Verringerung der Modulzahl in jedem Zweig des Konverters und ein verringerter Installationsaufwand erreicht werden.

In dem Konverter wird zudem jedes verbaute Schaltmodul von einem der Zweigströme durchflossen. Aus der Verringerung der Modulzahl ist daher auch eine entsprechende Senkung der Verluste des Konverters möglich.

Als Nebeneffekt kann sich zudem eine Verringerung der Modulzahl auch positiv auf die Verteilung der Durchlassverluste der Halbleiter der einzelnen Schaltmodule auswirken und somit geringfügig höhere Zweigströme - also höhere Konverterleistungen ermöglichen.

Um die beschriebenen im Kreis fließenden Oberschwingungen zu erzeugen, werden vorzugsweise durch drei teilbare Oberschwingungsströme (bezogen auf die Frequenz des am Konverter anliegenden Wechselstromsystems gemäß Figur 1) in die Zweigströme eingeprägt. Sie bilden eine Gleichtaktkomponente und wirken sich also auf alle Zweige identisch aus. Vorzugsweise werden für die dritte und die neunte Oberschwingung Oberschwingungsströme erzeugt.

Es gelten für einen stationären Betrieb des Konverters beispielsweise als reiner Blindleistungskompensator die oben aufgeführten Formeln wie folgt (Annahmen: Nutzung der dritten Stromharmonischen, Konverterverluste vernachlässigt):

$$I_{Z12}(t) = \hat{I}_{Z12} \cdot \sin\left(\omega \cdot t + \frac{\pi}{2}\right) + \hat{I}_3 \cdot \sin\left(3 \cdot \omega \cdot t + \varphi_3\right)$$

$$(10)$$

$$U_{\Sigma SM12}(t) = \hat{U}_{Z12} \cdot \sin(\omega \cdot t) - L_Z \cdot \left( \hat{I}_{Z12} \cdot \cos\left( \omega \cdot t + \frac{\pi}{2} \right) \cdot \omega + \hat{I}_3 \cdot \cos(3 \cdot \omega \cdot t + \varphi_3) \cdot 3 \cdot \omega \right) \quad (11)$$

Durch geschickte Auswahl der Amplitude und Phasenlage einer oder mehrerer der genannten Oberschwingungen kann der Leistungsverlauf über jedem Konverterzweig also so verändert werden, dass sich ein Energiehub einstellt, der kleiner ist als der ohne die genannten Oberschwingungen entstehende, wie dies in den Figuren 3 und 4 beispielhaft gezeigt ist. Die auftretende Maximalenergie $W_{max}$ wird dadurch verringert. Damit kann bei der Auslegung des Konverters die Reihenschaltzahl und/oder die Schaltmodulkapazität C verringert werden, wodurch Kosten und Konverterverluste gesenkt werden können.

Die zur Reduzierung des Energiehubs einzuprägenden Oberschwingungen können auf vielfältige Weise bestimmt werden. Es bietet sich beispielsweise eine Kennfeldsteuerung an, die abhängig vom aktuellen Zustand des Konverters die optimalen Oberschwingungsparameter ausliest und entsprechend aufsteuert. Das entsprechende Kennfeld kann dabei auf vielfältige Weise erstellt worden sein (z. B. analytische Berechnung, numerische Optimierung etc.). Alternativ kann - beispielsweise für dynamische Vorgänge - auch ein Regelungssystem vorgesehen werden, das die entsprechenden Oberschwingungen selbsttätig einregelt.

Das beschriebene Verfahren zum Berechnen und Erzeugen der zusätzlich einzuprägenden Oberschwingungen kann unabhängig von den sonst üblichen Leistungs-, Spannungs-, Strom-, Energiebalance- Regelungs- / Steuerverfahren, wie es bei dem Ausführungsbeispiel gemäß Figur 1 von dem Steuerprogramm PR1 gesteuert bzw. geregelt wird, durchgeführt werden, weil die Oberschwingungen den "normalen" Zweigströmen, die in der Figur 1 durch das Steuerprogramm PR1 berechnet werden, überlagert werden und die aufmodulierten Oberschwingungen die von dem Steuerprogramm PR1 geregelten Größen und Balanceverhältnisse nicht beeinflussen.

Ebenso kann die Bestimmung und/oder Erzeugung der Oberschwingungen auch als integraler Bestandteil der genannten Regelungen/Steuerungen ausgeführt werden.

Es entsteht also kein zusätzlicher Aufwand im Leistungsteil des Konverters (Messeinrichtungen etc.) zur Realisierung der Oberschwingungserzeugung. Sie kann beispielsweise in Software realisiert werden und könnte auch nachträglich ohne Hardware-änderungen in bereits bestehenden Anlagen nachgerüstet werden.

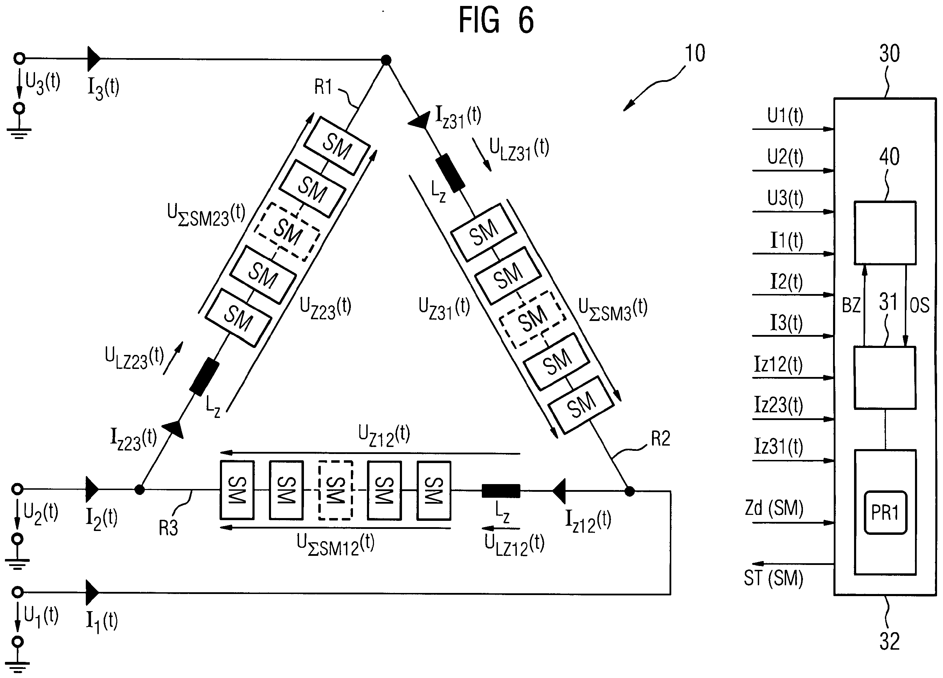

Die Figur 6 zeigt ein zweites Ausführungsbeispiel für einen erfindungsgemäßen Konverter 10. Der Konverter gemäß Figur 6 entspricht von der Funktionsweise her dem Konverter gemäß Figur 1. Im Unterschied dazu ist das Oberschwingungsermittlungsmodul 40 in der Steuereinrichtung 30 implementiert.

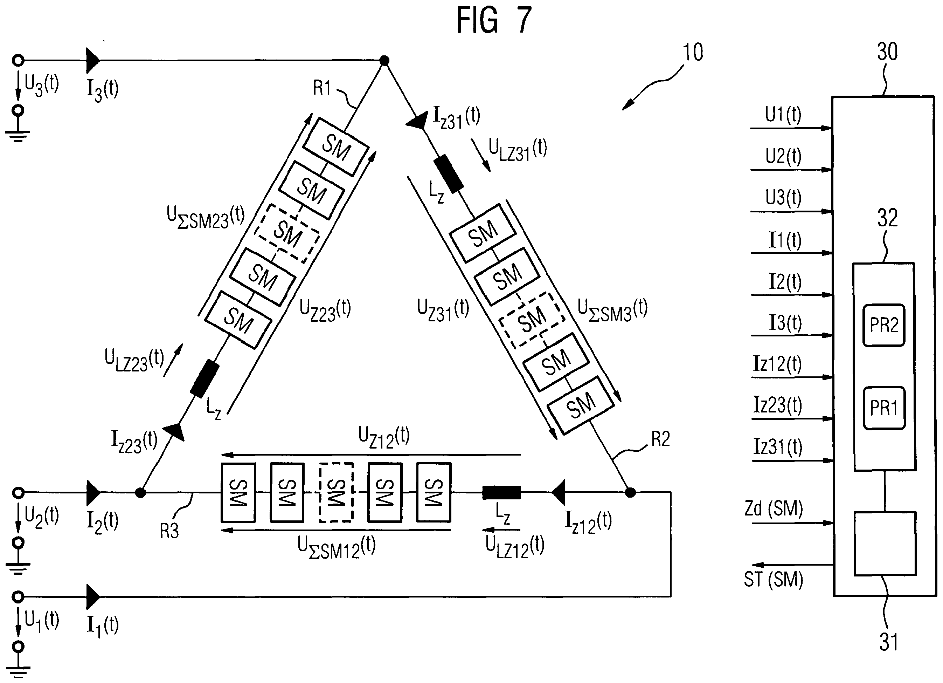

Die Figur 7 zeigt ein drittes Ausführungsbeispiel für einen erfindungsgemäßen Konverter 10, bei dem das Oberschwingungsermittlungsmodul 40 durch ein Softwareprogrammmodul PR2 gebildet ist, das in dem Speicher 32 der Recheneinrichtung 31 der Steuereinrichtung 30 hinterlegt ist. Zur Ermittlung der Oberschwingungsgehaltsdaten bzw. zur Ermittlung der zusätzlichen Stromoberschwingungen, die für eine Reduktion des Energiehubs in den Reihenschaltungen R1, R2 und R3 erforderlich bzw. vorteilhaft sind, muss die Recheneinrichtung 31 der Steuereinrichtung 30 lediglich das Softwareprogrammmodul PR2 aufrufen und ausführen.

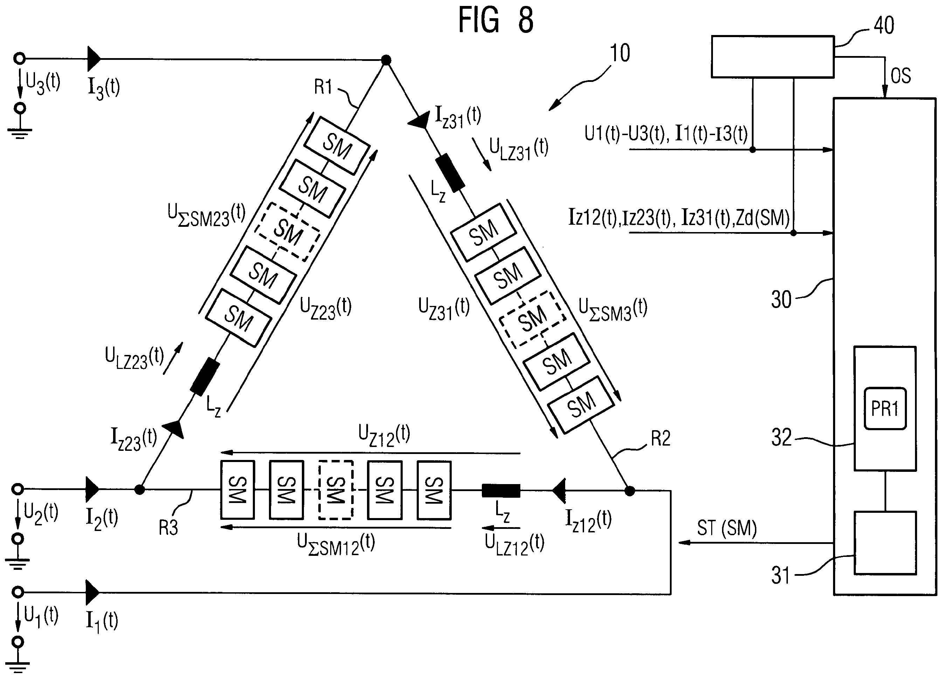

Die Figur 8 zeigt ein viertes Ausführungsbeispiel für einen erfindungsgemäßen Konverter 10, bei dem das Oberschwingungsermittlungsmodul 40 unmittelbar die Messsignale bzw. Messdaten verarbeitet, die auch von der Steuereinrichtung 30 verarbeitet werden. Das Oberschwingungsermittlungsmodul 40 kann somit unabhängig von Betriebszustandsdaten arbeiten, die von der Steuereinrichtung 30 bereitgestellt werden. Im Übrigen entspricht die Arbeitsweise des Oberschwingungsermittlungsmoduls 40 sowie des Konverters 10 insgesamt der Arbeitsweise des Konverters 10 gemäß Figur 1.

Die oben beschriebene Aufmodulation der Oberschwingungen kann sowohl im stationären Zustand, als auch bei transienten Vorgängen (z.B. im Fehlerfall) geschehen. Aufgrund der besseren mathematischen Darstellbarkeit wurde in o. g. Rechenbeispielen der quasistationäre Zustand gezeigt. Die Möglichkeit der Einprägung der Oberschwingungen im transienten Fall ist jedoch in den beschriebenen Überlegungen inbegriffen.

**Patentansprüche**

1. Konverter (10) für eine dreiphasige Spannung mit

   - drei elektrisch im Dreieck geschalteten Reihenschaltungen (R1, R2, R3), von denen jede jeweils mindestens zwei in Reihe geschaltete Schaltmodule (SM) und eine Induktivität umfasst, und
   - einer mit den Schaltmodulen (SM) in Verbindung stehenden Steuereinrichtung (30), die dazu eingerichtet ist, die Schaltmodule (SM) derart anzusteuern, dass in den Reihenschaltungen (R1, R2, R3) Zweigströme mit der Grundfrequenz der dreiphasigen Spannung und mit mindestens einer zusätzlichen Stromoberschwingung fließen, wobei die zusätzliche Stromoberschwingung derart bemessen ist, dass sie in den Reihenschaltungen (R1, R2, R3) des Konverters (10) im Kreis fließt und innerhalb des Konverters verbleibt,

**dadurch gekennzeichnet, dass**

- ein Energiehub (ΔW) der Reihenschaltung die Differenz zwischen maximaler und minimaler Zweigenergie während einer Netzperiode in dieser Reihenschaltung ist,
- die zusätzlichen Stromoberschwingungen die dritte und die neunte Oberschwingung sind und die zusätzlichen Stromoberschwingungen hinsichtlich ihrer Größe und Phasenlage derart bemessen sind, dass der Energiehub (ΔW) in jeder der Reihenschaltungen (R1, R2, R3) kleiner ist als ohne die zusätzlichen Stromoberschwingungen.

2. Konverter nach Anspruch 1,
   **dadurch gekennzeichnet, dass**
   der Konverter (10) einen Kompensator bildet, insbesondere einen Blindleistungs-, Oberschwingungs- oder Flickerkompensator.

3. Konverter nach Anspruch 1 oder 2,
   **dadurch gekennzeichnet, dass**

   - der Konverter (10) ein Oberschwingungsermittlungsmodul (40) aufweist, das anhand des jeweiligen Konverterbetriebszustands die mindestens eine zusätzliche Stromoberschwingung ermittelt, wobei die zusätzliche Stromoberschwingung derart bemessen ist, dass sie in den Reihenschaltungen (R1, R2, R3) des Konverters (10) im Kreis fließt und innerhalb des Konverters verbleibt, und
   - wobei die Steuereinrichtung (30) die Schaltmodule (SM) derart ansteuert, dass in den Reihenschaltungen (R1, R2, R3) die von dem Oberschwingungsermittlungsmodul (40) ermittelte mindestens eine zusätzliche Stromoberschwingung fließt.

4. Konverter nach einem der voranstehenden Ansprüche, **dadurch gekennzeichnet, dass** jedes der Schaltmodule (SM) jeweils mindestens vier Transistoren (T1-T4) und einen Kondensator (C) umfasst.

5. Verfahren zum Betreiben eines Konverters für eine dreiphasige Spannung mit drei elektrisch im Dreieck geschalteten Reihenschaltungen (R1, R2, R3), von denen jede jeweils mindestens zwei in Reihe geschaltete Schaltmodule (SM) und eine Induktivität umfasst, wobei

   - die Schaltmodule (SM) derart angesteuert werden, dass in den Reihenschaltungen (R1, R2, R3) Zweigströme mit der Grundfrequenz der dreiphasigen Spannung und einer vorgegebenen Größe und/oder einem vorgegebenen zeitlichen Verlauf fließen,
   - anhand des jeweiligen Konverterbetriebszustands mindestens eine zusätzliche Stromoberschwingung ermittelt wird, wobei die zusätzliche Stromoberschwingung derart bemessen wird, dass sie in den Reihenschaltungen (R1, R2, R3) des Konverters (10) im Kreis fließt und innerhalb des Konverters (10) verbleibt, und
   - die Schaltmodule (SM) derart angesteuert werden, dass in den Reihenschaltungen (R1, R2, R3) die ermittelte mindestens eine zusätzliche Stromoberschwingung fließt,

   **dadurch gekennzeichnet, dass**

   - ein Energiehub (ΔW) der Reihenschaltung die Differenz zwischen maximaler und minimaler Zweigenergie während einer Netzperiode in dieser Reihenschaltung ist,
   - die zusätzlichen Stromoberschwingungen die dritte und die neunte Oberschwingung sind und die zusätzlichen Stromoberschwingungen hinsichtlich ihrer Größe und Phasenlage derart bemessen werden, dass der Energiehub (ΔW) in jeder der Reihenschaltungen (R1, R2, R3) kleiner ist als ohne die zusätzlichen Stromoberschwingungen.

6. Verfahren nach Anspruch 5,
   **dadurch gekennzeichnet, dass** ein oder mehrere Oberschwingungsströme, deren Frequenz einem durch drei teilbaren Vielfachen der Grund- bzw. Netzfrequenz der dreiphasigen Spannung entspricht, in die Zweigströme der Reihenschaltungen (R1, R2, R3) eingeprägt werden.

7. Verfahren nach einem der voranstehenden Ansprüche 5-6,

**dadurch gekennzeichnet, dass** in den Konverter (10) eine oder mehrere Oberschwingungsspannungen eingeprägt werden, deren Frequenz einer durch drei teilbaren Harmonischen der Grund- bzw. Netzfrequenz der dreiphasigen Spannung entspricht.

8. Verfahren nach einem der voranstehenden Ansprüche 5-7,
   **dadurch gekennzeichnet, dass** mit dem Konverter (10) eine Kompensation durchgeführt wird, insbesondere eine Blindleistungs-, Oberschwingungs- oder Flickerkompensation.

**Claims**

1. Converter (10) for a three-phase voltage with

   - three electrically delta-connected series circuits (R1, R2, R3), each of which comprises at least two switching modules (SM) connected in series and an inductance, and
   - a control apparatus (30) connected to the switching modules (SM), which control apparatus is configured to operate the switching modules (SM) such that branch currents with the fundamental frequency of the three-phase voltage and with at least one additional current harmonic flow in the series circuits (R1, R2, R3), wherein the additional current harmonic is dimensioned such that it flows in a closed loop in the series circuits (R1, R2, R3) of the converter (10), and remains within the converter,

   **characterized in that**

   - an energy swing ($\Delta W$) of the series circuit is the difference between the maximum and minimum branch energies during a mains period in said series circuit,
   - the additional current harmonics are the third and the ninth harmonic and the magnitude and phase of the additional harmonic currents are dimensioned such that the energy swing ($\Delta W$) in each of the series circuits (R1, R2, R3) is smaller than without the additional harmonic currents.

2. Converter according to Claim 1,
   **characterized in that**
   the converter (10) constitutes a compensator, in particular a compensator for reactive power, harmonics or flicker.

3. Converter according to Claim 1 or 2,
   **characterized in that**

   - the converter (10) comprises a harmonic determination module (40), which determines the at least one additional current harmonic on the basis of the respective converter operating state, wherein the additional current harmonic is dimensioned such that it flows in a closed loop in the series circuits (R1, R2, R3) of the converter (10) and remains within the converter, and
   - wherein the control apparatus (30) operates the switching modules (SM) such that the at least one additional current harmonic determined by the harmonic determination module (40) flows in the series circuits (R1, R2, R3).

4. Converter according to one of the preceding claims,
   **characterized in that**
   each of the switching modules (SM) comprises at least four transistors (T1-T4) and a capacitor (C).

5. Method for the operation of a converter for a three-phase voltage with three electrically delta-connected series circuits (R1, R2, R3), each of which comprises at least two switching modules (SM) connected in series and an inductance,
   wherein

   - the switching modules (SM) are operated such that branch currents with the fundamental frequency of the three-phase voltage and with a specified magnitude and/or a specified waveform flow in the series circuits (R1, R2, R3),
   - on the basis of the respective converter operating state, at least one additional current harmonic is determined, wherein the additional current harmonic is dimensioned such that it flows in a closed loop in the series circuits (R1, R2, R3) of the converter (10) and remains inside the converter (10), and

- the switching modules (SM) are operated such that the at least one additional current harmonic determined flows in the series circuits (R1, R2, R3),

**characterized in that**

- an energy swing ($\Delta$W) of the series circuit is the difference between the maximum and minimum branch energies during a mains period in said series circuit,
- the additional current harmonics are the third and the ninth harmonic and the magnitude and phase of the additional harmonic currents are dimensioned such that the energy swing ($\Delta$W) in each of the series circuits (R1, R2, R3) is smaller than without the additional harmonic currents.

6. Method according to Claim 5,
   **characterized in that**
   one or more harmonic currents, whose frequency corresponds to a multiple, divisible by three, of the fundamental or mains frequency of the three-phase voltage, are impressed onto the branch currents of the series circuits (R1, R2, R3).

7. Method according to one of the preceding Claims 5-6,
   **characterized in that**
   one or more harmonic voltages are impressed into the converter (10), whose frequency corresponds to a harmonic, divisible by three, of the fundamental or mains frequency of the three-phase voltage.

8. Method according to one of the preceding Claims 5-7,
   **characterized in that**
   a compensation is performed with the converter (10), in particular a compensation for reactive power, harmonics or flicker.

**Revendications**

1. Convertisseur (10) pour une tension triphasée comprenant

   - trois circuits (R1, R2, R3) série montés électriquement en triangle, dont chacun comprend respectivement au moins deux modules (SM) de coupure montés en série et une inductance, et
   - un dispositif (30) de commande qui est en liaison avec les modules (SM) de coupure et qui est conçu pour commander les modules (SM) de coupure de manière à ce qu'il passe dans les circuits (R1, R2, R3) série des courants dérivés ayant la fréquence fondamentale de la tension triphasée et ayant au moins un harmonique de courant supplémentaire, dans lequel l'harmonique de courant supplémentaire est tel qu'il passe en circuit dans les circuits (R1, R2, R3) série de convertisseur et reste à l'intérieur du convertisseur,

   **caractérisé en ce que**

   - une amplitude ($\Delta$W) de l'énergie du circuit série est la différence entre l'énergie dérivée maximum et minimum pendant une période du réseau dans ce circuit série,
   - les harmoniques de courant supplémentaires sont le troisième et le neuvième harmoniques et les harmoniques de courant supplémentaire sont, en ce qui concerne leur grandeur et leur position en phase, tels que l'amplitude ($\Delta$W) de l'énergie dans chacun des circuits (R1, R2, R3) série est plus petite que sans les harmoniques de courant supplémentaires.

2. Convertisseur suivant la revendication 1,
   **caractérisé en ce que** le convertisseur (10) forme un compensateur, notamment un compensateur de puissance réactive, d'harmoniques ou de tremblotements.

3. Convertisseur suivant la revendication 1 ou 2,
   **caractérisé en ce que**

   - le convertisseur (10) a un module (40) de détermination d'harmoniques qui, à l'aide de l'état de fonctionnement respectif du convertisseur, détermine le au moins un harmonique de courant supplémentaire, dans lequel l'harmonique de courant supplémentaire est tel qu'il passe en circuit dans les circuits (R1, R2, R3) série du convertisseur (10) et restent à l'intérieur du convertisseur et
- dans lequel le dispositif (30) de commande commande les modules (SM) de coupure de manière à ce qu'il passe dans les circuits (R1, R2, R3) série, le au moins un harmonique de courant supplémentaire déterminé par le module (40) de détermination d'harmoniques.

4. Convertisseur suivant l'une des revendications précédentes, **caractérisé en ce que** chacun des modules (SM) de coupure comprend respectivement au moins quatre transistors (T1 à T4) et un condensateur (C)

5. Procédé pour faire fonctionner un convertisseur pour une tension triphasée ayant trois circuits (R1, R2, R3) série montés électriquement en triangle, dont chacun comprend respectivement au moins deux modules (SM) de coupure montés en série et une inductance, dans lequel

- on commande les modules (SM) de coupure de manière à faire passer dans les circuits (R1, R2, R3) série des courants dérivés, ayant la fréquence fondamentale de la fonction triphasée et une intensité donnée à l'avance et/ou une courbe en fonction du temps donnée à l'avance,
- à l'aide de l'état de fonctionnement respectif du convertisseur, on détermine au moins un harmonique de courant supplémentaire, dans lequel on donne à l'harmonique de courant supplémentaire une valeur telle qu'il passe en circuit dans les circuits (R1, R2, R3) série du convertisseur (10) et reste à l'intérieur du convertisseur (10) et
- on commande les modules (SM) de coupure de manière à faire passer le au moins un harmonique de courant supplémentaire dans les circuits (R1, R2, R3) série,

**caractérisé en ce que**

- une amplitude (ΔW) de l'énergie du circuit série est la différence entre l'énergie dérivée maximum et minimum pendant une période du réseau dans ce circuit série,
- les harmoniques de courant supplémentaires sont le troisième et le neuvième harmoniques et les harmoniques de courant supplémentaire sont, en ce qui concerne leur grandeur et leur position en phase, tels que l'amplitude (ΔW) de l'énergie dans chacun des circuits (R1, R2, R3) série est plus petite que sans les harmoniques de courant supplémentaires.

6. Procédé suivant la revendication 5, **caractérisé en ce qu'**on injecte dans les courants dérivés des circuits (R1, R2, R3) série un ou plusieurs courants d'harmoniques dont la fréquence correspond à un multiple divisible par trois de la fréquence fondamentale ou de la fréquence de réseau de la tension triphasée.

7. Procédé suivant l'une des revendications 5 à 6, **caractérisé en ce qu'**on applique au convertisseur (10) une ou plusieurs tensions d'harmonique, dont la fréquence correspond à l'un des harmoniques divisibles par trois de la fréquence fondamentale ou de la fréquence de réseau de la tension triphasée.

8. Procédé suivant l'une des revendications 5 à 7 précédentes, **caractérisé en ce que** l'on effectue avec le convertisseur (10) une compensation, notamment une compensation de puissance réactive, d'harmoniques ou de tremblotements.

FIG 1

FIG 2

R1

R2

Izos

R3

# FIG 3

# FIG 4

## FIG 5

FIG 6

# FIG 7

U3(t)  I3(t)

R1  I$_{z31}$(t)

U$_{LZ31}$(t)

L$_z$

SM

SM

U$_{\Sigma SM23}$(t)

SM

SM

SM

U$_{Z23}$(t)

U$_{Z31}$(t)

SM

SM

SM

U$_{\Sigma SM3}$(t)

SM

SM

U$_{LZ23}$(t)

L$_z$

I$_{z23}$(t)

10

R2

U2(t)  I2(t)

R3

U$_{Z12}$(t)

SM  SM  SM  SM  SM

L$_z$

U$_{LZ12}$(t)

I$_{z12}$(t)

U$_{\Sigma SM12}$(t)

U1(t)  I1(t)

30

U1(t)

U2(t)

U3(t)

I1(t)

I2(t)

I3(t)

32

Iz12(t)

Iz23(t)

PR2

PR1

Iz31(t)

Zd (SM)

ST (SM)

31

EP 2 766 980 B1

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011105177 A1

- WO 2010145706 A1

**In der Beschreibung aufgeführte Nicht-Patentliteratur**

- **M. PEREIRA et al.** SVC PLUS: An MMC STATCOM for Network and Grid Access Applications. *IEEE Trondheim Power Tech,* 2011